# EUROPÄISCHE PATENTSCHRIFT

(11) **EP 3 915 162 B1**
(45) Veröffentlichungstag und Bekanntmachung des Hinweises auf die Patenterteilung: **18.10.2023**
(21) Anmeldenummer: 19816649.8
(22) Anmeldetag: 05.12.2019
(51) Int. Cl.: H01M 4/86, H01M 4/88, H01M 8/1018, H01M 8/10

(54) **VERFAHREN ZUR HERSTELLUNG EINER ELEKTRODE UND ELEKTRODE FÜR EINE BRENNSTOFFZELLE**
METHOD FOR MANUFACTURING AN ELECTRODE AND ELECTRODE FOR A FUEL CELL
PROCÉDÉ DE FABRICATION D'UNE ÉLECTRODE ET ÉLECTRODE POUR UNE PILE À COMBUSTIBLE

(30) Priorität: 25.01.2019 DE 102019200964
(43) Veröffentlichungstag der Anmeldung: 01.12.2021
(73) Patentinhaber: Audi AG, 85045 Ingolstadt (DE); VOLKSWAGEN AG, 38440 Wolfsburg (DE)
(72) Erfinder: SCHLADT, Thomas, 38126 Braunschweig (DE); SCHMIDT, Lasse, 38440 Wolfsburg (DE); GRAF, Tanja, 38126 Braunschweig (DE); HÜBNER, Gerold, 38104 Braunschweig (DE); MÜLLER, Jonathan Edward, 38448 Wolfsburg (DE)
(74) Vertreter: Hentrich Patent- & Rechtsanwaltspartnerschaft mbB
(86) Internationale Anmeldenummer: PCT/EP2019/083761
(87) Internationale Veröffentlichungsnummer: WO 2020/151865

(56) Entgegenhaltungen:
- DE-A1-102007 020 947
- US-A1- 2013 330 651
- US-A1- 2014 011 119

## Beschreibung

Die Erfindung betrifft ein Verfahren zur Herstellung einer Elektrode für eine Brennstoffzelle sowie eine entsprechende Elektrode.

Die Elektroden einer Brennstoffzelle umfassen aus Edelmetallen oder Edelmetalllegierungen gebildete Katalysatoren. Hierbei werden Edelmetalle oder Legierungen aus Platin, Palladium, Ruthenium oder dergleichen verwendet. Im Hinblick auf den Serieneinsatz von Brennstoffzellen gibt es deshalb die Bestrebung, den Edelmetallgehalt bzw. den Katalysatoranteil in der Elektrode zu reduzieren.

Wird die Edelmetallbeladung, insbesondere die Platinbeladung, bei den bekannten Elektroden lediglich reduziert, so zeigen die damit ausgestatteten Brennstoffzellen einen erheblichen Einbruch der Zellleistung, insbesondere wenn Beladungen von 0,1 Milligramm Platin pro Quadratzentimeter Elektrodenfläche (0,1 mg Pt/cm²) und weniger vorliegen. Dieser Leistungsverlust wird dem Anstieg des Sauerstoffdiffusionswiderstands bei diesen geringen Beladungen zugeschrieben, der auf einer ungenügenden Sauerstoffversorgung der Reaktionszone um den Edelmetallkatalysator herum beruht.

Um die Zufuhr von Sauerstoff zur Reaktionszone zu erleichtern, ist es bekannt, den in der Elektrode vorhandenen lonomerbinder zu modifizieren durch eine geeignete Auswahl von Polymeren mit kurzkettigen Seitenketten oder mit einer anderen Dichte von Sulfonsäuregruppen, die das Quellvermögen des lonomerbinders in der Elektrode beeinflussen.

Die Anbindung der Katalysatorpartikel an das protonenleitfähige lonomer entscheidet maßgeblich über die Leistungsfähigkeit der Brennstoffzellen. Heute übliche Verfahren zur Herstellung von Brennstoffzellenelektroden aus Katalysatorpartikeln und protonenleitfähigen lonomeren basieren auf nass-chemischen Ansätzen und einer damit einhergehenden statistischen Verteilung und damit Bedeckung des Ionomers auf den Katalysatorpartikeln. Ein Beispiel einer solchen nasschemischen Herstellung ist der DE 10 2015 114 454 A1 zu entnehmen. Auch die DE 10 2014 102 894 A1 zeigt ein nasschemisches Verfahren zur Bildung einer verstärkten Elektrodenanordnung. Solche nasschemischen Herstellverfahren können zu Fehlstellen oder zu ungenügenden Bedeckungen und damit ungenügenden Anbindungen des Ionomers führen, die insbesondere dann zu Tage treten, wenn von der Brennstoffzelle eine hohe Stromdichte abverlangt wird, bei welcher sämtliche oder nahezu alle Transportwege für Reaktionsmedien, für Produktwasser, aber auch für Elektronen und Protonen ausgenutzt werden.

Die US 2014/011119 A1 beschreibt ein Verfahren zur Herstellung einer Elektrode einer Brennstoffzelle, bei dem die Katalysatorpartikel auf die Partikelträger mittels Atomlagenabscheidung (ALD) aufgebracht werden.

Die DE 10 2007 020947 A1 beschreibt eine Gasdiffusionselektrode für eine Festoxidbrennstoffzelle (SOFC), bei welcher auf die Gasdiffusionsschicht eine poröse Katalysatorschicht aufgebracht ist, welche aus einem elektrisch leitfähigen Trägermaterial und auf das Trägermaterial aufgebrachtes katalytisches Material umfasst.

In der US 2013/330651 A1 wird eine Katalysatorschicht beschrieben, die sowohl protonenleitendes lonomer als auch Katalysatorpartikel umfasst, wobei die Mischung nasschemisch auf dem porösen und elektrisch leitfähigen Träger aufgebracht ist.

Es ist daher die Aufgabe der vorliegenden Erfindung, ein Verfahren zur Herstellung einer Elektrode und eine entsprechende Elektrode bereitzustellen, die die vorstehend erwähnten Nachteile reduzieren.

Der das Verfahren betreffende Teil der Aufgabe wird durch ein Verfahren mit den Merkmalen des Anspruchs 1 gelöst. Vorteilhafte Ausgestaltungen mit zweckmäßigen Weiterbildungen der Erfindung sind in den abhängigen Ansprüchen angegeben.

Das Verfahren zur Herstellung einer Elektrode für eine Brennstoffzelle, insbesondere für eine Polymerelektrolytmembran-Brennstoffzelle (PEM-Brennstoffzelle) umfasst die folgenden Schritte:
- Bereitstellen einer Mehrzahl von auf mindestens einem elektrisch leitfähigen Partikelträger geträgerten Katalysatorpartikeln, und
- Abscheiden von einer oder von mehreren Atom- oder Moleküllagen eines Ionomers aus der Gasphase auf den Katalysatorpartikeln und/oder dem mindestens einen Partikelträger und dadurch Bildung einer protonenleitfähigen lonomerbeschichtung.

Damit ist der Vorteil verbunden, dass nunmehr kein nasschemisches Verfahren zur Bildung der Beschichtung mit einem lonomer verwendet wird, das zu einer ungleichmäßigen Beschichtung führen könnte. Hierbei wird ein Atom- oder Moleküllagenwachstum auf dem Partikelträgern oder dem Katalysatorpartikeln hervorgerufen, so dass eine homogene und gleichmäßige Beschichtung mit den protonenleitfähigen lonomeren vorliegt. Dadurch wird eine optimierte lonomer-Katalysatorstruktur für elektrochemische Elektroden geschaffen, die zu einer hoch-performanten (PEM-)Brennstoffzelle führt.

Bevorzugt ist eine lagenweise Abscheidung der lonomerbeschichtung mittels eines Zyklus einer chemischen Gasphasenabscheidung, insbesondere mittels einem Zyklus einer Moleküllagenabscheidung (MLD: "Molecular Layer Deposition"). Bei der Moleküllagenabscheidung (MLD) werden die Monomere des gewünschten Ionomers aus der Gasphase als eine einzelne Moleküllage auf dem Grundkörper, d.h. dem Katalysatormaterial, abgeschieden und anschließend polymerisiert. Dieser Prozess wird beliebig oft wiederholt, wobei sich die Schichtdicke nach jedem Zyklus um eine Moleküllage erhöht. Die gewünschte lonomerschichtdicke lässt sich durch die Anzahl der MLD-Zyklen gezielt einstellen.

Um einen verbesserten Transport der Reaktanten, des Produktwassers, der Protonen und der Elektronen an oder nahe der Elektrode zu gewährleisten, hat es sich als sinnvoll erwiesen, wenn bei der Herstellung der Elektrode zusätzlich die folgenden Schritte durchgeführt werden:
- Deposition von Atomen oder Molekülen mindestens eines Passivierungsreaktanten auf einer Oberfläche der Katalysatorpartikel und dadurch Bildung von mindestens einem passivierten Bereich an der Oberfläche der Katalysatorpartikel vor der Bildung der protonenleitfähigen Ionomerbeschichtung,
- Abscheiden der protonenleitfähigen lonomerbeschichtung abseits des mindestens einen passivierten Bereichs der Oberfläche des Katalysators, sowie
- Entfernen des mindestens einen Passivierungsreaktanten von den Katalysatorpartikeln und dadurch Bildung der protonenleitfähigen Ionomerbeschichtung mit einer, insbesondere vorgegebenen oder vorgebbaren, Porosität.

Bei der Passivierung, nämlich dem Abscheiden des Passivierungsreaktanten an der Oberfläche der Katalysatorpartikel, wird die chemische Eigenschaft von Edelmetallen oder Edelmetallverbindungen ausgenutzt, stärkere chemische Bindungen mit bestimmten Molekülen einzugehen, welche als Katalysatorgifte bezeichnet werden. Durch die Einbringung oder Aufbringung solcher Substanzen aus der Gasphase wird die Oberfläche des Edelmetallkatalysators gezielt bedeckt, wodurch im folgenden Schritt an den von dem Passivierungsreaktanten besetzten Plätzen keine lonomermoleküle adsorbiert werden können. Nach der vollständigen Aufbringung der lonomerbeschichtung wird dann die passivierende Substanz von der Edelmetalloberfläche wieder entfernt, womit Defekte oder Fehlstellen in der lonomerbeschichtung verbleiben oder auftreten, wo zuvor die passivierende Substanz vorlag. Durch diese Defekte oder Fehlstellen entstehen Poren oder Kanäle, durch die die Oberfläche des Katalysatorpartikels für Reaktanten zugänglich bleibt.

An welcher Stelle der Passivierungsreaktant an der Oberfläche des Katalysatorpartikels anhaftet, ist abhängig von der Oberflächenenergie, wobei der ausgewählte Passivierungsreaktant jeweils den für ihn energetisch günstigsten "Platz" an der Oberfläche des Katalysatorpartikels einnimmt. Der mindestens eine Passivierungsreaktant ist vorzugsweise ausgewählt aus einer Gruppe, die Kohlenstoffmonoxid (CO), Cyanidionen (CN-, z.B. aus einer Zersetzung von HCN, oder aus einer Zersetzung von einer organischen oder einer anorganischen Cyanidverbindung), Thiocyanate (SCN-), Isothiocyanate (NCS-), Sulfide (R-S-, oder S²⁻), Schwefelwasserstoff (H₂S), primäre, sekundäre, tertiäre Amine (R-NH₂, R,R`-NH, R,R`,R"-N) und Ammoniak (NH₃) umfasst. Der Einsatz dieser Passivierungsreaktanten führt dazu, dass aus der Gasphase abgeschiedene protonenleitfähige Ionomere ihren energetisch günstigsten Platz auf Bereichen des Partikelträgers und/oder des Katalysatorpartikels finden, da die durch die Passivierungsreaktanten bereitgestellten Plätze für diese energetisch ungünstiger sind. Oder mit anderen Worten: Es sind durch den Passivierungsreaktanten Plätze bereits besetzt, die vom lonomer nicht eingenommen werden können.

Je nach Anwendungsfall und je nach gewünschter Porosität der protonenleitfähigen lonomerbeschichtung hat es sich als sinnvoll erwiesen, wenn sich der mindestens eine passivierte Bereich der Oberfläche des Katalysatorpartikels an einer Partikelkante oder an einer Partikelecke des Katalysatorpartikels befindet. Hierzu ist daher ein Passivierungsreaktant notwendig, der bei seiner Abscheidung vorzugsweise an Stufen, Ecken oder Kanten des Katalysatormaterials anhaftet; beispielsweise ein solcher, der dort den energetisch günstigsten Platz einnimmt. Prinzipiell kommen hierbei die oben erwähnten Substanzen in Frage. Aufgrund geometrischer Effekte können größere Adsorbatmoleküle von Vorteil sein (d.h. Moleküle mit Seitengruppen (primäre Sulfide R-SH, mit R = Methyl, Ethyl, Propyl, etc., oder sekundäre Sulfide R,R`-S mit R = Methyl, Ethyl, Propyl, etc., oder primäre Amine R-NH2 mit R = Methyl, Ethyl, Propyl, etc., oder sekundäre Amine R,R`-NH, mit R = Methyl, Ethyl, Propyl, etc., oder tertiäre Amine R,R',R"-N mit R = Methyl, Ethyl, Propyl, etc.).

Alternativ oder ergänzend kann sich der mindestens eine passivierte Bereich der Oberfläche des Katalysatorpartikels auch an einer Partikelfacette des Katalysatorpartikels befinden. Als Partikelfacette ist ein Teilbereich der Oberfläche des Katalysatorpartikels zu verstehen, der sich abseits von Ecken, Kanten oder Stufen des Katalysatorpartikels befindet. Hierzu ist also gegebenenfalls ein weiterer Passivierungsreaktant abzuscheiden, für den die Besetzung der Plätze abseits der Kanten, Ecken oder Stufen, mithin also auf einer Facette der Katalysatorpartikel energetisch günstiger ist. Hierbei kommen ebenfalls einige der oben erwähnten Substanzen in Frage. Auf den Kristallfacetten (v.a. den katalytisch besonders aktiven {111}-Facetten) sind die Platinatome jedoch dichter angeordnet als an den Kanten, Ecken und Stufen, weswegen kleinere Adsorbatmoleküle, wie z.B. Kohlenstoffmonoxid (CO), Schwefelwasserstoff (H₂S) oder Ammoniak (NH₃) leichter anbinden können und daher bevorzugt sind.

Eine einfache Möglichkeit, um den mindestens einen Passivierungsreaktanten von dem Katalysatorpartikel zu entfernen, ist die Zuführung von thermischer Energie an den mindestens einen Partikelträger und/oder an die Katalysatorpartikel. Das bedeutet also, dass der Partikelträger oder die Katalysatorpartikel erwärmt werden, wodurch sich der Passivierungsreaktant von der Oberfläche des Katalysatorpartikels löst.

Alternativ oder ergänzend kann der Passivierungsreaktant auch entfernt werden durch Anlegen eines Unterdrucks, mithin eines Vakuums, an den mindestens einen Partikelträger und/oder an den Katalysatorpartikeln, womit bei Unterschreiten eines Grenz-Drucks die Energie der Passivierungsreaktanten ausreicht, um von der Oberfläche des Katalysatorpartikels zu desorbieren.

Alternativ oder ergänzend kann auch die Erzeugung eines Plasmas an oder nahe dem mindestens einen Partikelträger und/oder an den Katalysatorpartikeln zur Ablösung des mindestens einen Passivierungsreaktanten führen. Hierbei kommt beispielsweise ein O₂-, ein N₂-, ein H₂- oder ein CHₓ-Plasma in Betracht.

Alternativ oder ergänzend kann der mindestens eine Passivierungsreaktant auch entfernt werden durch Zuführung mindestens eines chemischen Depassivierungsreaktanten an den mindestens einen Partikelträger und/oder an die Katalysatorpartikel.

Um die lonomerpolymere der protonenleitfähigen lonomerbeschichtung zu stabilisieren und um diese vor oxidativem Abbau zu schützen, hat es sich zudem als vorteilhaft erwiesen, wenn nach dem Entfernen des mindestens einen Passivierungsreaktanten auf den mindestens einen Partikelträger und/oder die Katalysatorpartikel eine radikalabbauende Imprägnierung aufgetragen wird. In diesem Zusammenhang hat sich eine Imprägnierung als vorteilhaft herausgestellt, die ein Cer-Salz oder ein Cer-Oxid umfasst.

Zur späteren Bildung einer Membranelektrodenanordnung hat es sich als vorteilhaft erwiesen, wenn die mit Katalysatorpartikeln bestückten Partikelträger in Pulverform vorliegen und auf ein Substrat aufgebracht werden, bevor die protonenleitfähige lonomerbeschichtung an oder auf ihnen abgeschieden wird.

Als Substrat kommt dabei beispielsweise die Gasdiffusionslage oder eine der Gasdiffusionslage zugeordnete mikroporöse Lage in Betracht. Auf diese Weise lässt sich eine Gasdiffusionselektrode (GDE = "gas diffusion electrode") formen. Alternativ kann als Substrat aber auch die Polymerelektrolytmembran genutzt werden, so dass dadurch eine katalysatorbeschichtete Membran (CCM = "Catalyst coated membrane") entsteht.

In beiden Fällen besteht zudem die Möglichkeit der Einbringung einer zusätzlichen, elektrisch leitfähigen, katalytisch aber nicht aktiven ionomerbeschichteten Komponente in die Elektrode, um den Protonen- und Wassertransport in der Elektrode zu verbessern. Als elektrisch leitfähige Komponente kommt hierbei beispielsweise ein ionomerbeschichteter Kohlenstoffpartikel, ionomerbeschichtetes Graphen, oder ionomerbeschichtete Kohlenstoffnanoröhrchen ("carbon nano tubes") in Betracht.

Die nach dem Verfahren hergestellte Elektrode für eine Brennstoffzelle, insbesondere für eine Polymerelektrolytmembran-Brennstoffzelle, umfasst eine Mehrzahl an elektrisch leitfähigen Partikelträgern, die einen oder mehrere Katalysatorpartikel tragen. Zudem ist eine protonenleitfähige lonomerbeschichtung vorhanden, die zumindest anteilig mit einem oder mit mehreren der Katalysatorpartikeln verbunden ist. Die protonenleitfähige lonomerbeschichtung zeichnet sich dadurch aus, dass sie mittels eines Passivierungsreaktanten mit einer voreingestellten Porosität versehen ist, deren Poren oder Kanäle in vorgegebener oder vorgebbarer Verteilung vorliegen.

Durch diese Verteilung der Poren kann der Edelmetallgehalt oder die Anzahl an Katalysatorpartikeln insgesamt niedrig gehalten werden, da die Kanäle oder Poren einen hinreichenden Stofftransport der Reaktanten der Brennstoffzelle gewährleisten. Zugleich ist ein zuverlässiger Protonentransport möglich aufgrund der zusammenhängenden, porösen lonomerbeschichtung. Die Verteilung der Poren und Kanäle ist aufgrund des eingesetzten Passivierungsschrittes gleichmäßiger als bei nasschemischer Herstellung der Elektrode.

Es ist möglich, dass die Poren in Bereichen der Oberfläche der Katalysatorpartikel an einer Partikelkante oder an einer Partikelecke des Katalysatorpartikels angeordnet sind.

Alternativ oder ergänzend besteht die Möglichkeit, dass die Poren oder Kanäle der lonomerbeschichtung an einer Partikelfacette des Katalysatorpartikels angeordnet sind.

Ferner kann eine radikalabbauende Imprägnierung auf die lonomerbeschichtung aufgebracht oder in diese eingebracht sein, so dass eine Stabilisierung der lonomerbeschichtung und damit ein Schutz vor oxidativem Abbau vorliegt.

Alle für das erfindungsgemäße Verfahren zur Herstellung einer Elektrode für eine Brennstoffzelle beschriebenen Vorteile und bevorzugten Ausführungsformen gelten auch für die erfindungsgemäße Elektrode.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungsformen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Schnittansicht einer Brennstoffzelle mit einer erfindungsgemäßen Elektrode,
- Fig. 2: eine lediglich schematisch dargestellte Detailansicht einer Elektrode,
- Fig. 3: eine Illustration der Herstellung einer Elektrode,
- Fig. 4: eine Illustration der gezielten Passivierung von Kristallecken und -kanten der Katalysatorpartikel,
- Fig. 5: eine Illustration der gezielten Passivierung von Kristallfacetten der Katalysatorpartikeln,
- Fig. 6: eine Illustration der Herstellung der Elektrode mit unterschiedlich ausgestalteten protonenleitfähigen lonomerbeschichtungen,
- Fig. 7: eine Illustration einer Elektrode mit einer als dünne Schicht gebildeten protonenleitfähigen lonomerbeschichtung,
- Fig. 8: eine Illustration einer Elektrode mit einer als ultra-dünne Schicht gebildeten protonenleitfähigen lonomerbeschichtung,
- Fig. 9: eine Illustration einer Elektrode mit einer als dünne Schicht gebildeten protonenleitfähige lonomerbeschichtung mit einer hohen Porosität,
- Fig. 10: eine Illustration des Verfahrensablaufs der nachträglichen Imprägnierung mit Ce⁴⁺,
- Fig. 11: eine Illustration der Herstellung einer Gasdiffusionselektrode (GDE), und
- Fig. 12: eine Illustration der Herstellung einer mit einem Katalysator beschichteten Membran (CCM).

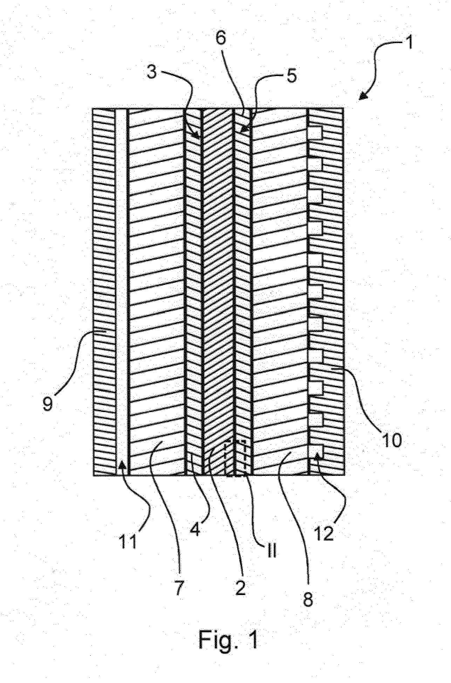

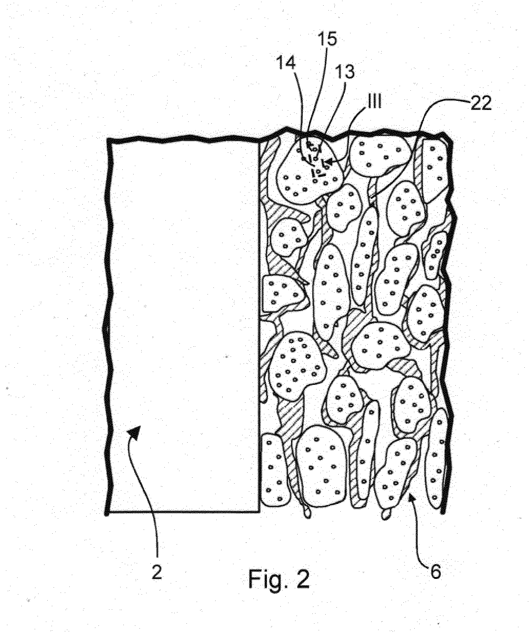

In Figur 1 ist eine Brennstoffzelle 1 gezeigt. Hierbei ist eine semipermeable Membran 2 auf einer ersten Seite 3 mit einer ersten Elektrode 4, vorliegend der Anode, und auf einer zweiten Seite 5 mit einer zweiten Elektrode 6, vorliegend der Kathode, bedeckt. Die erste Elektrode 4 und die zweite Elektrode 6 umfassen Partikelträger 14, auf denen Katalysatorpartikel 13 aus Edelmetallen oder Gemischen umfassend Edelmetalle wie Platin, Palladium, Ruthenium oder dergleichen, angeordnet oder geträgert sind (Fig. 2). Diese Katalysatorpartikel 13 dienen als Reaktionsbeschleuniger bei der elektrochemischen Reaktion der Brennstoffzelle 1. Die Partikelträger 14 können kohlenstoffhaltig sein. Es kommen aber auch Partikelträger 14 in Betracht, die aus einem Metalloxid gebildet sind. In einer derartigen Polymerelektrolytmembranbrennstoffzelle (PEM-Brennstoffzelle) werden an der ersten Elektrode 5 (Anode) Brennstoff oder Brennstoffmoleküle, insbesondere Wasserstoff, in Protonen und Elektronen aufgespaltet. Die Membran 2 lässt die Protonen (z.B. H⁺) hindurch, ist aber undurchlässig für die Elektronen (e⁻). Die Membran 2 ist aus einem lonomer, vorzugsweise einem sulfonierten Tetrafluorethylen-Polymer (PTFE) oder einem Polymer der perfluorierten Sulfonsäure (PFSA) gebildet. An der Anode erfolgt dabei die folgende Reaktion: 2H₂ → 4H⁺ + 4e⁻ (Oxidation/Elektronenabgabe).

Während die Protonen durch die Membran 2 zur zweiten Elektrode 6 (Kathode) hindurchtreten, werden die Elektronen über einen externen Stromkreis an die Kathode oder an einen Energiespeicher geleitet. An der Kathode ist ein Kathodengas, insbesondere Sauerstoff oder Sauerstoff enthaltende Luft, bereitgestellt, so dass hier die folgende Reaktion stattfindet: O₂ + 4H⁺ + 4e⁻ → 2H₂O (Reduktion/Elektronenaufnahme).

Vorliegend ist den Elektroden 4, 6 jeweils eine Gasdiffusionslage 7, 8 zugeordnet, wovon die eine Gasdiffusionslage 7 der Anode und die andere Gasdiffusionslage 8 der Kathode zugeordnet ist. Zudem ist der anodenseitigen Gasdiffusionslage 7 eine Bipolarplatte 9 zur Zuführung des Brennstoffgases zugeordnet, die über ein Brennstoffflussfeld 11 verfügt. Mittels des Brennstoffflussfeldes 11 wird der Brennstoff durch die Gasdiffusionslage 7 hindurch der Elektrode 4 zugeführt. Kathodenseitig ist der Gasdiffusionslage 8 eine ein Kathodengasflussfeld 12 umfassende Bipolarplatte 10 zur Zuführung des Kathodengases an die Elektrode 6 zugeordnet.

Die Zusammensetzung oder der Aufbau der Elektroden 4, 6 ist in Figur 2, dem Detail II-II aus Figur 1, näher zu erkennen, wobei hier insbesondere die kathodenseitige Elektrode 6 näher gezeigt ist. Es sei angemerkt, dass die Elektroden 4, 6 auch als integraler Bestandteil der Gasdiffusionslagen 7, 8 vorliegen können, nämlich in Form einer mikroporösen Lage 21 (MPL). Die Elektroden 4, 6 sind vorliegend mit einer Mehrzahl an Katalysatorpartikeln 13 gebildet, welche beispielsweise aus Platin oder einer Platinlegierung gebildet sind. Vorzugsweise sind die Katalysatorpartikel 13 aber Nanopartikel, welche zum Beispiel als Kern-Hülle-Nanopartikel ("core-shell-nanoparticles") gebildet sein können. Sie weisen den Vorteil einer großen Oberfläche auf, wobei das Edelmetall oder die Edelmetalllegierung lediglich an der Oberfläche angeordnet ist, während ein geringerwertiges Metall, beispielsweise Nickel oder Kupfer oder eine Legierung dieser Metalle, den Kern des Nanopartikels bilden.

Die Katalysatorpartikel 13 sind auf einer Mehrzahl von elektrisch leitfähigen Partikelträgern 14 angeordnet oder geträgert. Zudem ist zwischen den Partikelträgern 14 und/oder den Katalysatorpartikeln 13 ein lonomerbinder 22 vorhanden, der vorzugsweise aus demselben Material wie die Membran 2 gebildet ist. Der lonomerbinder 22 ist porös und weist in der gewählten Darstellung eine Porosität von größer als 30 Prozent auf. Es besteht auch die Möglichkeit, dass der lonomerbinder 22 eine deutlich geringere Porosität besitzt, wodurch die elektrisch leitfähigen Katalysatorpartikel 13 stärker mit-einander protonenleitend verbunden sind. Die Bildung eines porösen lonomerbinders 22 gewährleistet insbesondere auf der Kathodenseite, dass der Sauerstoffdiffusionswiderstand nicht erhöht wird und dadurch eine geringere Beladung des Katalysatorpartikels 13 mit Edelmetall oder eine geringere Beladung der Partikelträger 14 mit Katalysatorpartikeln 13 ermöglicht ist. Anstelle oder in Ergänzung des Einsatzes eines lonomerbinders 22 können die Partikelträger 14 bzw. die Katalysatorpartikel 13 auch mittels einer protonenleitfähigen Ionomerbeschichtung 15 miteinander verbunden sein, auf die nachstehend anhand des Detailausschnitts III näher eingegangen wird.

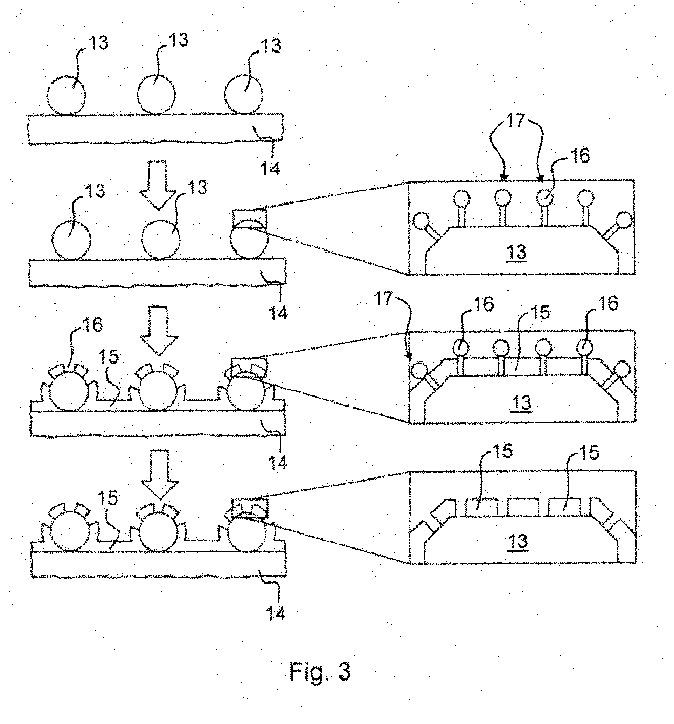

Figur 3 veranschaulicht die Herstellung der Elektrode 4, 6. Hierbei wird zunächst eine Mehrzahl der auf dem elektrisch leitfähigen Partikelträger 14 geträgerten Katalysatorpartikeln 13 bereitgestellt. Der Partikelträger 14 bildet vorliegend also das Substrat für die Katalysatorpartikel 13. Anschließend wird die Oberfläche der Katalysatorpartikel 13 selektiv passiviert. Hierzu werden aus der Gasphase Atome oder Moleküle mindestens eines Passivierungsreaktanten 16 auf eine Oberfläche der Katalysatorpartikel 13 abgeschieden. Hierdurch entsteht einer oder entstehen mehrere passivierte Bereiche 17 an der Oberfläche der Katalysatorpartikel 13. Die Atome oder Moleküle des Passivierungsreaktanten 16 besetzten Plätze auf dem Katalysatorpartikel 13, die bei der nachfolgenden Abscheidung von mehreren Atom- oder Moleküllagen eines Ionomers aus der Gasphase nicht mehr belegt werden können. Eine aus der Gasphase abgeschiedene protonenleitfähige lonomerbeschichtung 15 wird im dritten Verfahrensschritt aufgebracht. Das Abscheiden erfolgt dabei abseits des mindestens einen passivierten Bereichs 17 der Oberfläche des Katalysatorpartikels 13. Schließlich wird der mindestens eine Passivierungsreaktant 16 von den Katalysatorpartikeln 13 entfernt, wodurch die protonenleitfähige lonomerbeschichtung 15 mit einer einstellbaren Porosität herausgebildet wird.

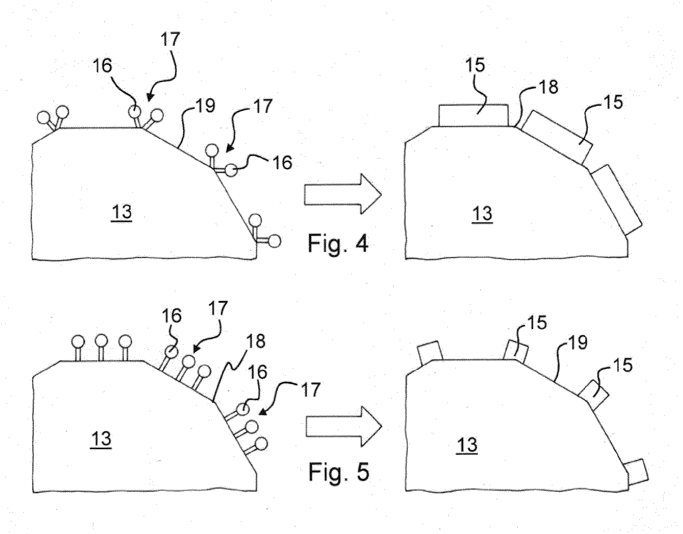

Anhand von Figur 4 ist zu erkennen, dass beim Passivierungschritt der Passivierungsreaktant 16 auf einer Partikelkante 18 oder einer Partikelecke abgeschieden wird, so dass nach Aufbringen der protonenleitfähigen Ionomerbeschichtung 15 und nach Entfernen des Passivierungsreaktanten 16 Kanäle oder Poren in der protonenleitfähigen lonomerbeschichtung 15 ausgebildet werden, die zu diesen Partikelkanten 18 oder Partikelecken der Katalysatorpartikel 13 führen. Mit anderen Worten bedeckt die protonenleitfähige Ionomerbeschichtung 15 dabei die Partikelfacetten 19 der Katalysatorpartikel 13.

In Figur 5 wird für die Passivierung ein Passivierungsreaktant 16 verwendet, der auf den Partikelfacetten 19 des Katalysatorpartikels 13 adsorbiert wird. Nach Aufbringen der protonenleitfähigen lonomerbeschichtung 15 und nach Entfernen des Passivierungsreaktanten 19 ergibt sich eine Elektrode 4, 6, bei der die protonenleitfähige lonomerbeschichtung 15 lediglich die Partikelkanten 18 oder -ecken bedeckt.

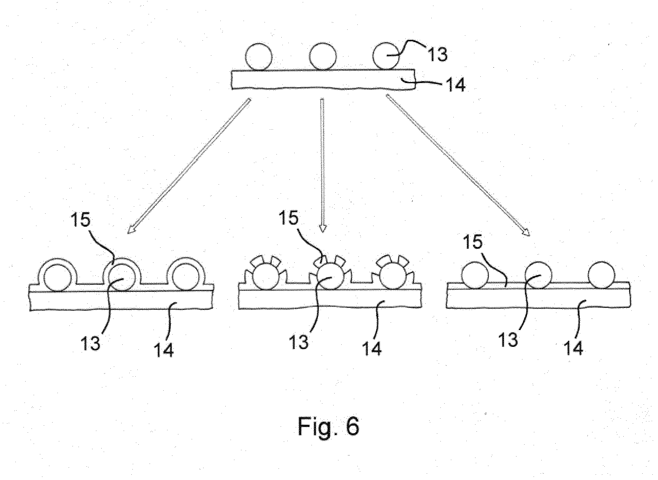

In Figur 6 ist die Herstellung einer Elektrode 4, 6 gezeigt, bei der im linken Bild eine unporöse oder mit einem geringen Porositätsgrad von maximal fünf Prozent gebildete protonenleitfähige lonomerbeschichtung 15 auf den Katalysatorpartikeln 13 und deren Partikelträger 14 abgeschieden ist. Da die lonomerbeschichtung 15 lagenweise abgeschieden wird mittels einem Zyklus oder mittels mehrerer Zyklen einer chemischen Gasphasenabscheidung, insbesondere mittels mehrerer Zyklen einer Moleküllagenabscheidung, lässt sich die Schichtdicke der lonomerbeschichtung 15 beliebig einstellen. Sie beträgt vorzugsweise von einzelnen Moleküllagen (Monolagen) bis hin zu 20 Nanometer (nm) oder 30 Nanometer. In Figur 6 ist aber nicht nur zu erkennen, dass unterschiedliche Schichtdicken für die lonomerbeschichtung 15 möglich sind, sie zeigt auch auf, dass unterschiedliche Porositätsgrade in Abhängigkeit des Einsatzes der Passivierungsreaktanten 16 bzw. in Abhängigkeit der Bedeckung der Oberfläche der Katalysatorpartikel 13 möglich sind. Die mittlere Illustration zeigt eine Porosität von zwischen 30 Prozent und 50 Prozent an der lonomerbeschichtung 15 auf, die sich an der Oberfläche des Katalysatorpartikels 13 befindet. Diese Porosität ist auch als geringe oder mittlere Passivierung zu verstehen, bei der eine dünne homogene lonomerschicht auf dem Substrat und eine poröse Schicht auf den Katalysatorpartikel 13 vorliegt. Auf der rechten Seite der Illustration nach Figur 6 ist eine sehr starke Passivierung zu erkennen, bei der die Katalysatorpartikel 13 weitestgehend von der Ionomerbeschichtung 15 frei bleiben und lediglich der Partikelträger 14 entsprechend beschichtet ist.

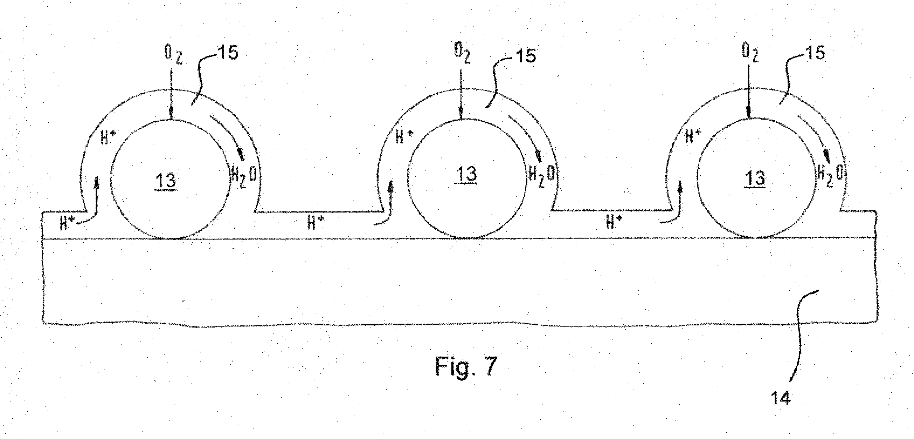

Figur 7 zeigt eine Elektrode 4, 6, bei der der Partikelträger 14 und die Katalysatorpartikel 13 mit einer dünnen Schicht einer lonomerbeschichtung 15 beschichtet sind, die keine bzw. eine geringe Porosität aufweist. Zudem sind die Transportmechanismen der Reaktanten, Protonen und des Produktwassers bei einer derart gebildeten lonomerbeschichtung 15 gezeigt.

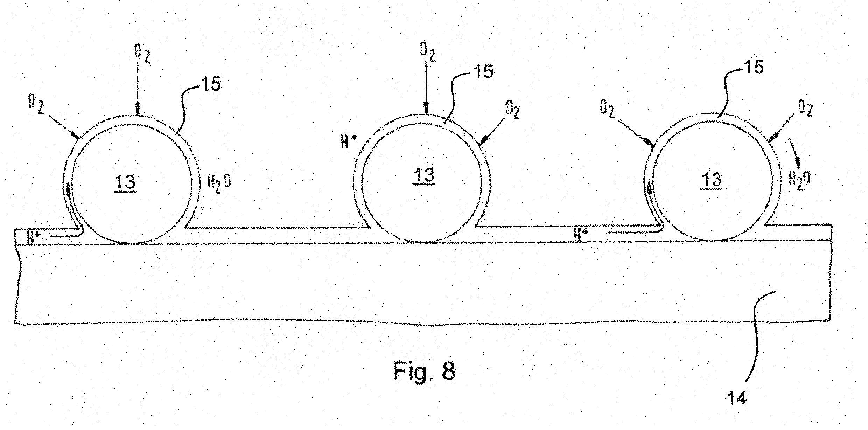

In Figur 8 ist ein Ausführungsbeispiel einer lonomerbeschichtung 15 als ultra-dünne Schicht gezeigt, die ebenfalls eine geringe oder keine Porosität besitzt. Diese ultra-dünne protonenleitfähige lonomerbeschichtung 15 kann beispielsweise aus lediglich einer Monolage bestehen. Zudem sind die Transportmechanismen der Reaktanten, Protonen und des Produktwassers bei einer solchen lonomerbeschichtung 15 gezeigt.

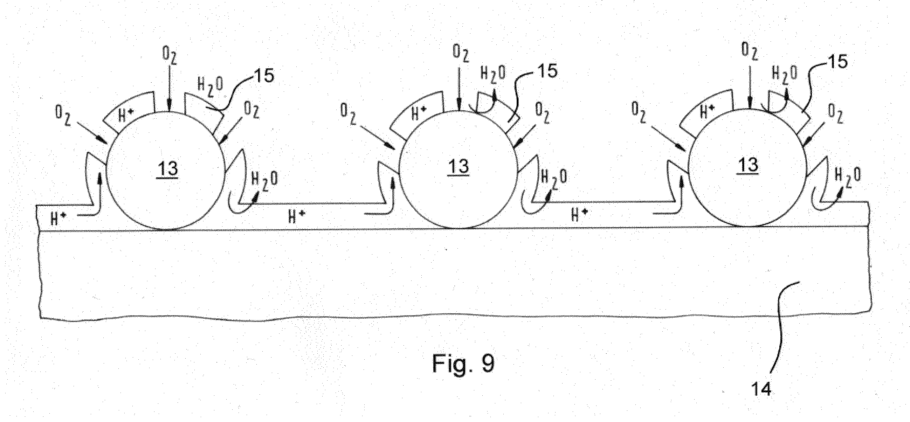

In Figur 9 ist die lonomerbeschichtung 15 mit einer hohen Porosität versehen. Zudem sind die Transportmechanismen der Reaktanten, Protonen und des Produktwassers bei einer derart gebildeten lonomerbeschichtung 15 gezeigt.

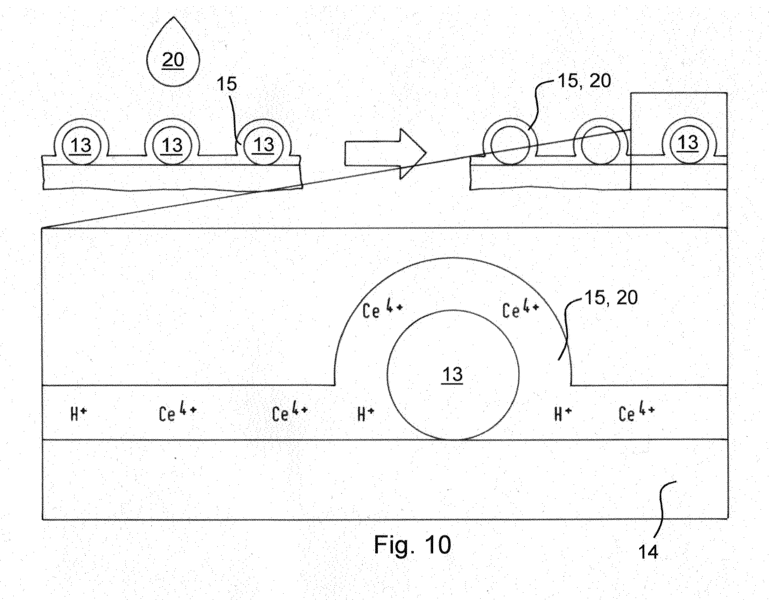

Für alle vorstehend erläuterten Ausführungsbeispiele ist zudem die Möglichkeit eröffnet, nach dem Entfernen des mindestens einen Passivierungsreaktanten 16 auf den mindestens einen Partikelträger 14 und/oder die Katalysatorpartikel 13 eine radikalabbauende Imprägnierung 20 aufzutragen, wie dies in Figur 10 näher gezeigt ist. Vorliegend wird vorgeschlagen, eine Imprägnierung 20 zu verwenden, die ein Cer-Salz oder ein Cer-Oxid umfasst (vorliegend erfolgt die Imprägnierung mit Ce⁴⁺).

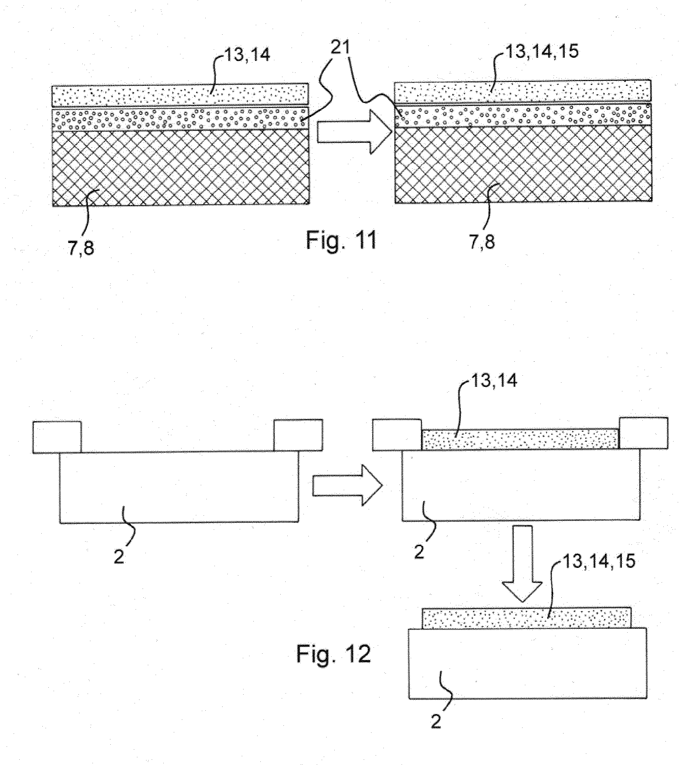

In Figur 11 ist eine Gasdiffusionselektrode gezeigt, bei der zunächst die mit den Katalysatorpartikeln 13 bestückten Partikelträger 14 in einer Pulverform vorliegen und auf ein Substrat, vorliegend auf die mikroporöse Lage 21 aufgebracht werden. Gegebenenfalls kann das Pulver auch zuvor verfestigt oder mittels eines geeigneten Binders gebunden sein. Anschließend wird das Pulver mit einem oder mit mehreren - ggfs. unterschiedlichen - Passivierungsreaktanten 16 passiviert. Danach erfolgt die Abscheidung der Ionomerbeschichtung 15. Der eine oder die mehreren Passivierungsreaktanten 16 werden dann entfernt, womit die entsprechende Porosität in der lonomerbeschichtung 15 herausgebildet wird. Dies führt zu einer porös gebildeten und damit hoch-performanten Gasdiffusionselektrode (GDE).

In Figur 12 wird die Möglichkeit aufgezeigt, dass die mit den Katalysatorpartikeln 13 bestückten Partikelträger 14 ebenfalls in Pulverform vorliegen und auf die Polymerelektrolytmembran 2 aufgebracht werden. Um das Pulver an der gewünschten Stelle zu halten, wird vorliegend ein Rahmen eingesetzt. Auch hier erfolgt als nächstes der Passivierungsschritt mit einem oder mit mehreren - ggfs. unterschiedlichen - Passivierungsreaktanten 16. Dann wird die protonenleitfähige lonomerbeschichtung 15 aus der Gasphase abgeschieden. Die zur Passivierung verwendeten Passivierungsreaktanten 16 werden anschließend auch hier entfernt. Dies führt zu einer hoch-performanten mit einem Katalysator beschichteten Membran 2 (CCM).

Die vorliegende Erfindung bringt zusammenfassend den Vorteil mit sich, dass trotz einer geringeren Edelmetallbeladung der Partikelträger 14 oder eines geringen Edelmetallanteils beim Katalysatorpartikel 13 kein oder nur ein unwesentlicher Leistungsverlust auftritt aufgrund eines verminderten Anstiegs des Sauerstoffwiderstands um die Reaktionszone. Zudem ist durch die Erfindung ein Herstellungsverfahren zur Herstellung der Elektroden 4, 6 offenbart, das eine deutliche Zeitersparnis aufgrund von geringeren Trocknungszeiten gegenüber nasschemischen Herstellverfahren aufweist.

### BEZUGSZEICHENLISTE:

- 1: Brennstoffzelle
- 2: Membran
- 3: erste Seite der Membran
- 4: Elektrode / Anode
- 5: zweite Seite der Membran
- 6: Elektrode / Kathode
- 7: anodenseitige Gasdiffusionslage
- 8: kathodenseitige Gasdiffusionslage
- 9: Bipolarplatte Brennstoffgas
- 10: Bipolarplatte Kathodengas
- 11: Brennstoffflussfeld
- 12: Kathodengasflussfeld
- 13: Katalysatorpartikel
- 14: Partikelträger (Substrat für Katalysatorpartikel)
- 15: lonomerbeschichtung
- 16: Passivierungsreaktant
- 17: passivierter Bereich
- 18: Partikelkante (Partikelecke)
- 19: Partikelfacette
- 20: Imprägnierung
- 21: Mikroporöse Lage (MPL)
- 22: lonomerbinder

## Patentansprüche

1. Verfahren zur Herstellung einer Elektrode (4, 6) für eine Brennstoffzelle (1), umfassend die Schritte:
- Bereitstellen einer Mehrzahl von auf mindestens einem elektrisch leitfähigen Partikelträger (14) geträgerten Katalysatorpartikeln (13), und
- Abscheiden von einer oder von mehreren Atom- oder Moleküllagen eines Ionomers aus der Gasphase auf den Katalysatorpartikeln (13) und/oder dem mindestens einen Partikelträger (14) und dadurch Bildung einer protonenleitfähigen lonomerbeschichtung (15).

2. Verfahren nach Anspruch 1, **gekennzeichnet durch** die Schritte:
- Deposition von Atomen oder Molekülen mindestens eines Passivierungsreaktanten (16) auf einer Oberfläche der Katalysatorpartikel (13) und dadurch Bildung von mindestens einem passivierten Bereich (17) an der Oberfläche der Katalysatorpartikel (13) vor der Bildung der protonenleitfähigen lonomerbeschichtung (15),
- Abscheiden der protonenleitfähigen lonomerbeschichtung (15) abseits des mindestens einen passivierten Bereichs (17) der Oberfläche des Katalysatorpartikels (13), sowie
- Entfernen des mindestens einen Passivierungsreaktanten (16) von den Katalysatorpartikeln (13) und dadurch Bildung der protonenleitfähigen lonomerbeschichtung (15) mit einer Porosität.

3. Verfahren nach Anspruch 2, **dadurch gekennzeichnet, dass** der mindestens eine Passivierungsreaktant (16) ausgewählt ist aus einer Gruppe, die Kohlenstoffmonoxid, Cyanidionen, Thiocyanate, Isothiocyanate, Sulfide, Hydrogensulfide, Schwefelwasserstoff, Amine und Ammoniak umfasst.

4. Verfahren nach Anspruch 2 oder 3, **dadurch gekennzeichnet, dass** sich der mindestens eine passivierte Bereich (17) der Oberfläche des Katalysatorpartikels (13) an einer Partikelkante (18) oder an einer Partikelecke des Katalysatorpartikels (13) befindet.

5. Verfahren nach einem der Ansprüche 2 bis 4, **dadurch gekennzeichnet, dass** sich der mindestens eine passivierte Bereich (17) der Oberfläche des Katalysatorpartikels (13) an einer Partikelfacette (19) des Katalysatorpartikels (13) befindet.

6. Verfahren nach einem der Ansprüche 2 bis 5, **dadurch gekennzeichnet, dass** der mindestens eine Passivierungsreaktant (16) entfernt wird durch Zuführung von thermischer Energie an den mindestens einen Partikelträger (14) und/oder an die Katalysatorpartikel (13).

7. Verfahren nach einem der Ansprüche 2 bis 6, **dadurch gekennzeichnet, dass** der mindestens eine Passivierungsreaktant (16) entfernt wird durch Anlegen eines Vakuums an dem mindestens einen Partikelträger (14) und/oder an den Katalysatorpartikeln (13).

8. Verfahren nach einem der Ansprüche 2 bis 7, **dadurch gekennzeichnet, dass** der mindestens eine Passivierungsreaktant (16) entfernt wird durch Erzeugung eines Plasmas an dem mindestens einen Partikelträger (14) und/oder an den Katalysatorpartikeln (13)

9. Verfahren nach einem der Ansprüche 2 bis 8, **dadurch gekennzeichnet, dass** der mindestens eine Passivierungsreaktant (16) entfernt wird durch Zuführung mindestens eines chemischen Depassivierungsreaktanten an den mindestens einen Partikelträger (14) und/oder an die Katalysatorpartikel (13).

10. Verfahren nach einem der Ansprüche 2 bis 9, **dadurch gekennzeichnet, dass** nach dem Entfernen des mindestens einen Passivierungsreaktanten (16) auf den mindestens einen Partikelträger (14) und/oder die Katalysatorpartikel (13) eine radikalabbauende Imprägnierung (20) aufgetragen wird.

11. Verfahren nach Anspruch 10, **dadurch gekennzeichnet, dass** die Imprägnierung (20) ein Cer-Salz oder ein Cer-Oxid umfasst.

12. Verfahren nach einem der Ansprüche 1 bis 11, **dadurch gekennzeichnet, dass** die mit den Katalysatorpartikeln (13) bestückten Partikelträger (14) in Pulverform vorliegen und auf ein Substrat aufgebracht werden, bevor die protonenleitfähige lonomerbeschichtung (15) an oder auf ihnen abgeschieden wird.

## Claims

1. A method of manufacturing an electrode (4,6) for a fuel cell (1), comprising the steps of:
- Providing a plurality of catalyst particles (13) supported on at least one electrically conductive particle support (14), and
- Depositing one or more atomic or molecular layer of an ionomer from the gas phase on the catalyst particles (13) and/or the at least one particle support (14) and thereby forming a proton-conductive ionomer layer (15).

2. The method according to claim 1, **characterized by** the steps:
- Depositing atoms or molecules of at least one passivating reactant (16) on a surface of the catalyst particles (13), thereby forming at least one passivated region (17) on the surface of the catalyst particles (13) prior to formation of the proton-conductive ionomer coating (15),
- Depositing the proton-conductive ionomer coating (15) away form the at least one passivated region (17) of the surface of the catalyst particle (13), and
- Removing the at least one passivating reactant (16) from the catalyst particles (13), thereby forming the proton-conductive ionomer coating (15) having a porosity.

3. The method according to claim 2, **characterized in that** the at least one passivating reactant (16) is selected from a group comprising carbon monoxide, cyanide ions, thiocyanates, isothio-cyanates, sulphides, hydrogen sulphides, amines and ammonia.

4. The method according to claim 2 or 3, **characterized in that** at least one passivated region (17) of the surface of the catalyst particle (13) is located at a particle edge (18) or at a particle corner of the catalyst particle (13).

5. The method according to any one of claims 2 to 4, **characterized in that** the at least one passivated region (17) of the surface of the catalyst particle (13) is located at a particle facet (19) of the catalyst particle (13).

6. The method according to any one of claims 2 to 5, **characterized in that** the at least one passivating reactant (16) is removed by supplying thermal energy to the at least one particle support (14) and/or to the catalyst particles (13).

7. The method according to any one of claims 2 to 6, **characterized in that** the at least one passivation reactant (16) is removed by applying a vacuum to the at least one particle support (14) and/or to the catalyst particles (13).

8. The method according to any one of claims 2 to 7, **characterized in that** the at least one passivating reactant (16) is removed by generating a plasma on the at least one particle support (14) and/or on the catalyst particles (13).

9. The method according to any one of claims 2 to 8, **characterized in that** the at least one passivating reactant (16) is removed by supplying at least one chemical depassivating reactant to the at least in one particle support (14) and/or to the catalyst particles (13).

10. The method according to any one of claims 2 to 9, **characterized in that**, after removal of the at least one passivation reactant (16), a radical-degrading impregnation (20) is applied to the at least one particle support (14) and/or the catalyst particles (13).

11. The method according to claim 10, **characterized in that** the impregnation (20) comprises a cerium salt or a cerium oxide.

12. The method according to any one of claims 1 to 11, **characterized in that** the particle supports (14) loaded with the catalyst particles (13) are in powder form and are applied to a substrate before the proton-conductive ionomer coating (15) is deposited on or at them.

## Revendications

1. Procédé de fabrication d'une électrode (4, 6) pour une pile à combustible (1), comprenant les étapes consistant à :
- fournir une pluralité de particules de catalyseur (13) supportées sur au moins un support de particules électroconducteur (14), et
- séparer une ou plusieurs couches atomiques ou moléculaires d'un ionomère en phase gazeuse sur les particules de catalyseur (13) et/ou sur l'au moins un support de particules (14) et former ainsi un revêtement ionomère conducteur de protons (15).

2. Procédé selon la revendication 1, **caractérisé par** les étapes consistant à :
- déposer des atomes ou molécules d'au moins un réactif de passivation (16) sur une surface des particules de catalyseur (13) et former ainsi au moins une zone passivée (17) à la surface des particules de catalyseur (13) avant la formation du revêtement ionomère conducteur de protons (15),
- séparer le revêtement ionomère conducteur de protons (15) à l'écart de l'au moins une zone passivée (17) de la surface de la particule de catalyseur (13), ainsi que
- éliminer l'au moins un réactif de passivation (16) des particules de catalyseur (13), et former ainsi le revêtement ionomère conducteur de protons (15) avec une porosité.

3. Procédé selon la revendication 2, **caractérisé en ce que** l'au moins un réactif de passivation (16) est sélectionné à partir d'un groupe qui comprend du monoxyde de carbone, des ions cyanure, des thiocyanates, des isothiocyanates, des sulfures, des hydrogénosulfures, du sulfure d'hydrogène, des amines et de l'ammoniac.

4. Procédé selon la revendication 2 ou 3, **caractérisé en ce que** l'au moins une zone passivée (17) de la surface de la particule de catalyseur (13) se trouve sur un bord de particule (18) ou sur un coin de particule de la particule de catalyseur (13).

5. Procédé selon l'une quelconque des revendications 2 à 4, **caractérisé en ce que** l'au moins une zone passivée (17) de la surface de la particule de catalyseur (13) se trouve sur une facette de particule (19) de la particule de catalyseur (13).

6. Procédé selon l'une quelconque des revendications 2 à 5, **caractérisé en ce que** l'au moins un réactif de passivation (16) est retiré par apport d'énergie thermique à l'au moins un support de particules (14) et/ou aux particules de catalyseur (13).

7. Procédé selon l'une quelconque des revendications 2 à 6, **caractérisé en ce que** l'au moins un réactif de passivation (16) est retiré par application d'un vide sur l'au moins un support de particules (14) et/ou sur les particules de catalyseur (13).

8. Procédé selon l'une quelconque des revendications 2 à 7, **caractérisé en ce que** l'au moins un réactif de passivation (16) est retiré par génération d'un plasma sur l'au moins un support de particules (14) et/ou sur les particules de catalyseur (13).

9. Procédé selon l'une quelconque des revendications 2 à 8, **caractérisé en ce que** l'au moins un réactif de passivation (16) est retiré par apport d'au moins un réactif de dépassivation chimique sur l'au moins un support de particules (14) et/ou sur les particules de catalyseur (13).

10. Procédé selon l'une quelconque des revendications 2 à 9, **caractérisé en ce qu'**après le retrait de l'au moins un réactif de passivation (16), une imprégnation (20) dégradant les radicaux est appliquée sur l'au moins un support de particules (14) et/ou sur les particules de catalyseur (13).

11. Procédé selon la revendication 10, **caractérisé en ce que** l'imprégnation (20) comprend un sel de cérium ou un oxyde de cérium.

12. Procédé selon l'une quelconque des revendications 1 à 11, **caractérisé en ce que** les supports de particules (14) équipés des particules de catalyseur (13) se présentent sous forme de poudre et sont appliqués sur un substrat avant que le revêtement ionomère conducteur de protons (15) soit déposé sur ou à leur surface.
